# EUROPEAN PATENT APPLICATION

(11) **EP 2 050 633 A2**
(43) Date of publication of application: **22.04.2009**
(21) Application number: 08164008.8
(22) Date of filing: 10.09.2008
(51) Int. Cl.: B60R 21/34

(54) **Airbag apparatus**

(30) Priority: 16.10.2007 JP 2007268683
(71) Applicant: TAKATA CORPORATION, Tokyo 106-8510 (JP)
(72) Inventor: Kobayashi, Yoshihiro, Tokyo Tokyo 106-8510 (JP)
(74) Representative: Vossius & Partner

(57) **Abstract**

The airbag apparatus as described inflates in a stable state and thereby catches, for example, a pedestrian appropriately and softly. An airbag apparatus 10 includes an airbag 20, an inflator 15 that discharges gas into the airbag 20, a detecting means that detects a collision, and a control means that activates the inflator 15 in response to a signal from the detecting means. The airbag 20 disposed along a front pillar 2 is inflated outside a vehicle 1. The airbag apparatus 10 includes a pipe 16 that supplies gas from the inflator to the airbag 20. The pipe outlet 16a is disposed, as viewed from above, in a pipe outlet locating area A surrounded by the extension X of the border between a fender 3 and a hood 4 of the vehicle 1 toward a windshield 6, the extension Y of the border between the fender 3 and the front pillar 2 toward the windshield 6, the front edge Z of a hinge pivot, and the outer surface of the fender 3 (FIG. 9).

## Description

The present invention belongs to the technical field of an airbag apparatus that is inflated and developed outside a vehicle by gas from an inflator in an emergency such as a collision of the vehicle with an object for cushioning the shock applied to the object and the vehicle.

There are apparatuses that inflate an airbag outside the pillar portion of a vehicle at the time of a collision between the vehicle and, for example, a pedestrian to cushion the shock when the pedestrian re-collides with the vehicle.
For example, there is disclosed an airbag apparatus in which, when an airbag body is inflated in front of the upper part of a front pillar, a cover is developed outward in the direction of the width of the vehicle, and the airbag body is inflated inward in the direction of the width of the vehicle and held at the inflating position, and thereby the shock cushioning performance is improved (see JP-A-2002-283939 (Patent Document 1)).

There is also disclosed an airbag apparatus in which a strap shorter than the full length of an airbag is stretched from the upper end to the lower end of the airbag and thereby the airbag inflates and develops along the outer side surface of a front pillar (see JP-A-2003-306099 (Patent Document 2)).

However, in Patent Documents 1 and 2, the location of the outlet of a pipe that supplies gas from the inflator to the airbag is not described.

The present invention is made in view of the above situation, and an object thereof is to provide an airbag apparatus that inflates in a stable state and thereby catches, for example, a pedestrian appropriately and softly.

To solve the above-described problems, according to the invention of Claim 1, an airbag apparatus includes an airbag, an inflator that discharges gas into the airbag, a detecting means that detects a collision, and a control means that activates the inflator in response to a signal from the detecting means. The airbag disposed along a front pillar is inflated outside a vehicle. The airbag apparatus includes a pipe that supplies gas from the inflator to the airbag. The pipe outlet of the pipe is disposed in a pipe outlet locating area surrounded by the extension of the border between a fender and a hood of the vehicle toward a windshield, the extension of the border between the fender and the front pillar toward the windshield, the front edge of a hinge pivot, and the outer surface of the fender.

According to the invention of Claim 2, a caulking portion between the airbag and the pipe is disposed in a depression.

According to the invention of Claim 3, the pipe outlet is disposed at an angle from a direction substantially parallel to the front pillar to a direction substantially perpendicular to the front pillar.

According to the present invention, an airbag apparatus includes a pipe that supplies gas from the inflator to the airbag. The pipe outlet of the pipe is disposed in a pipe outlet locating area surrounded by the extension of the border between a fender and a hood of the vehicle toward a windshield, the extension of the border between the fender and the front pillar toward the windshield, the front edge of a hinge pivot, and the outer surface of the fender. Therefore, the airbag can smoothly inflate without being interfered with by the vehicle.

Since a caulking portion between the airbag and the pipe is disposed in a depression, the space just above the pillar where the airbag is housed can be expanded.

Since the pipe outlet is disposed at an angle from a direction substantially parallel to the front pillar to a direction substantially perpendicular to the front pillar, the airbag uniformly inflates and shakes less when inflating.

The embodiments of the present invention will now be described with reference to the drawings.
FIG. 1 shows an embodiment of an airbag according to the present invention;
FIG. 2 is a perspective view of a vehicle equipped with an airbag apparatus of this embodiment;
FIG. 3 is a perspective view of a front pillar of a vehicle of this embodiment and its vicinity.
FIG. 4 is a sectional view taken along line a-a of FIG. 3;
FIG. 5 shows the operation of the airbag apparatus 10 of this embodiment;
FIG. 6 is a perspective view of the front pillar 2 and its vicinity in the completion stage of inflation;
FIG. 7 is a sectional view taken along line b-b of FIG. 6;
FIG. 8 is an enlarged view of the through anchor and its vicinity;
FIG. 9 is an enlarged view of the pipe outlet 16a and its vicinity;
FIG. 10 is a plan view of FIG. 9;
FIG. 11 is a side view of FIG. 9; and
FIG. 12 shows the pipe connecting portion 20b and its vicinity.

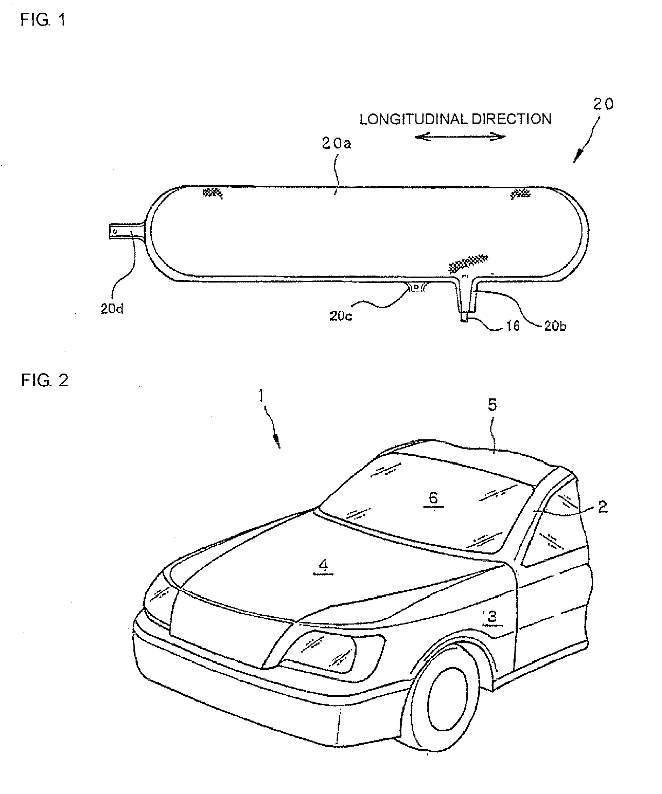

FIG. 1 shows an airbag 20 of this embodiment. The airbag 20 of this embodiment is formed by folding and sewing a single base cloth, and includes a main inflating portion 20a, a pipe connecting portion 20b, a first engaging portion 20c, and a second engaging portion 20d. The main inflating portion 20a has a substantially elliptical shape. When inflated, the main inflating portion 20a cushions the shock to a collision object such as a pedestrian. The pipe connecting portion 20b protrudes in a direction perpendicular to the longitudinal direction of the main inflating portion 20a. A pipe 16 is inserted into the pipe connecting portion 20b, and then the pipe connecting portion 20b is caulked. The first engaging portion 20c protrudes near the pipe connecting portion 20b in a direction perpendicular to the longitudinal direction of the main inflating portion 20a, and is used to engage the airbag 20 with the vehicle body. The second engaging portion 20d is provided at one end of the main inflating portion 20a, and is used to engage the airbag 20 with the vehicle body.

Next, a state where an airbag apparatus 10 including the airbag 20 is installed in a vehicle 1 will be described.

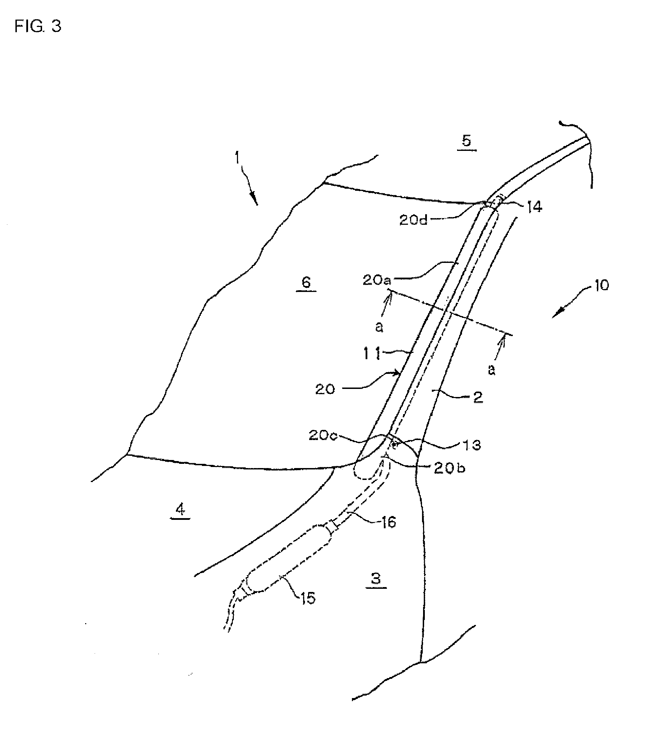

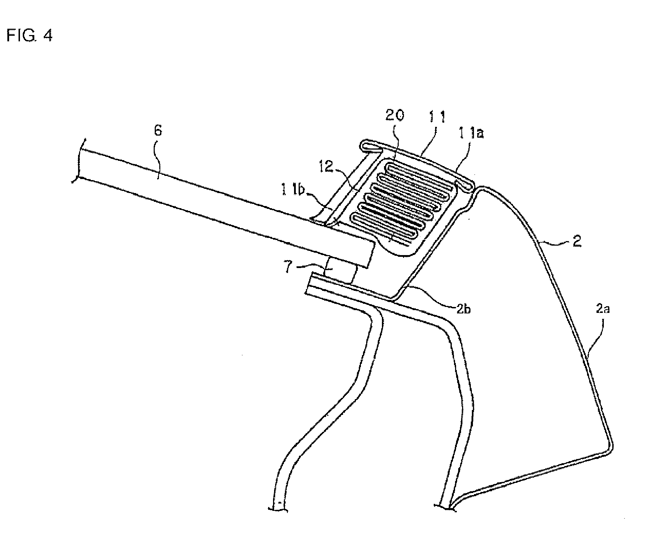

FIG. 2 is a perspective view of a vehicle equipped with an airbag apparatus of this embodiment. FIG. 3 is a perspective view of a front pillar of a vehicle of this embodiment and its vicinity. FIG. 4 is a sectional view taken along line a-a of FIG. 3.

In the figures, reference numeral 1 denotes a vehicle, reference numeral 2 denotes a front pillar, reference numeral 3 denotes a fender, reference numeral 4 denotes a hood, reference numeral 5 denotes a roof, reference numeral 6 denotes a windshield, reference numeral 7 denotes a seal, reference numeral 10 denotes an airbag apparatus, reference numeral 11 denotes a cover, reference numeral 12 denotes an air bag case, reference numerals 13 and 14 denote anchors, reference numeral 15 denotes a gas generator, reference numeral 16 denotes a pipe, reference numeral 20 denotes an airbag.

A vehicle 1 has front pillars 2 that connect fenders 3 and a roof 5. In addition, the vehicle 1 has a windshield 6 surrounded by a hood 4, the roof 5, and the front pillars 2 and attached using a seal 7.

An airbag apparatus 10 is housed in the windshield 6 side of the front pillar 2 and the fender 3 on each side. The front pillar 2 has a first surface 2a that faces the outside of the vehicle 1 and a second surface 2b that faces the windshield. On the second surface 2b side, an airbag 20 is folded and housed in a bag case 12, and housed in a cover 11.

The cover 11 has a substantially L-shaped cross-sectional shape and includes an upper cover 11a and a side cover 11b, and is disposed so as to hide the airbag 20 folded on the second surface 2b side of the front pillar 2. The folded airbag 20 may be directly housed in the cover 11 without being housed in the bag case 12.

The first engaging portion 20c is engaged with part of the vehicle body such as the fender 3 by the anchor 13. The second engaging portion 20d is engaged with part of the vehicle body such as the roof 5 by the anchor 14.

The first engaging portion 20c may be engaged with a gas generator 15.

In the fender 3, a gas generator 15 that generates gas to inflate the airbag 20 and a pipe 16 that supplies the gas generated in the gas generator 15 to the airbag 20 are housed.

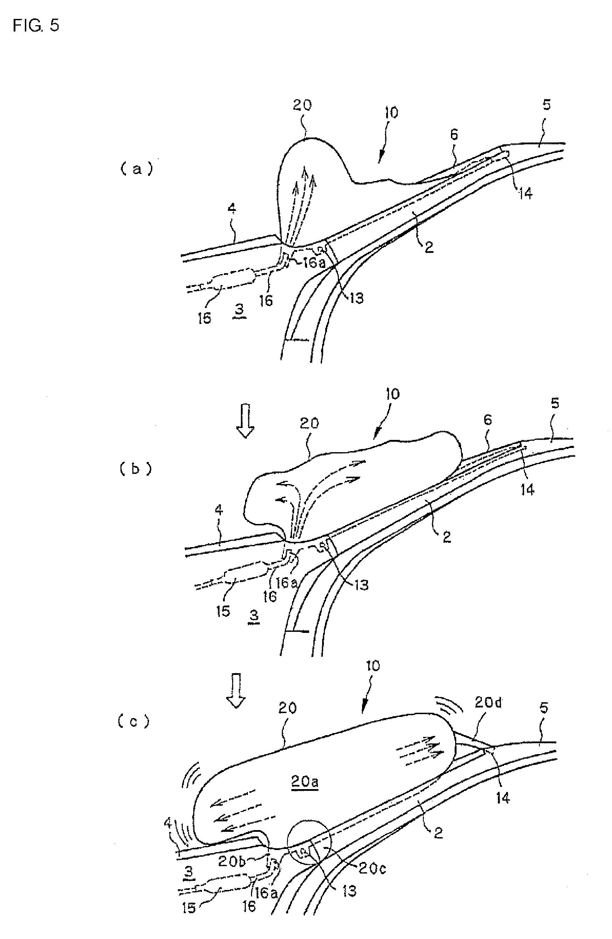

Next, the operation of the airbag apparatus 10 of this embodiment will be described. FIG. 5 shows the operation of the airbag apparatus 10 of this embodiment.

The airbag apparatus 10 in its housed state shown in FIG. 3 is activated when the vehicle 1 collides with an object (not shown) and a detecting means (not shown) detects the impact force applied to the vehicle 1, on the basis of the detection signal, for example, by a control means.

FIG. 5 (a) shows an early stage of inflation in which the airbag apparatus 10 starts operation, gas flows from the gas generator 15 housed in the fender 3 through the pipe 16 into the airbag 20, and the airbag 20 starts to inflate. In the early stage of inflation, the airbag 20 starts inflation in the direction that the pipe outlet 16a faces, and the cover 11 shown in FIG. 4 opens due to the inflation pressure.

FIG. 5 (b) shows a middle stage of inflation in which gas flows from the gas generator 15 through the pipe 16 into the airbag 20, and the airbag 20 continues to inflate. In the middle stage of inflation, the airbag 20 is inflated from its folded state by gas flowing toward the front and rear of the vehicle, and is completely exposed outside.

FIG. 5 (c) shows a completion stage of inflation in which the inflation of the airbag 20 is completed. In the completion stage of inflation, the airbag 20 is completely inflated. The state of the airbag apparatus 10 in the completion stage of inflation will be described.

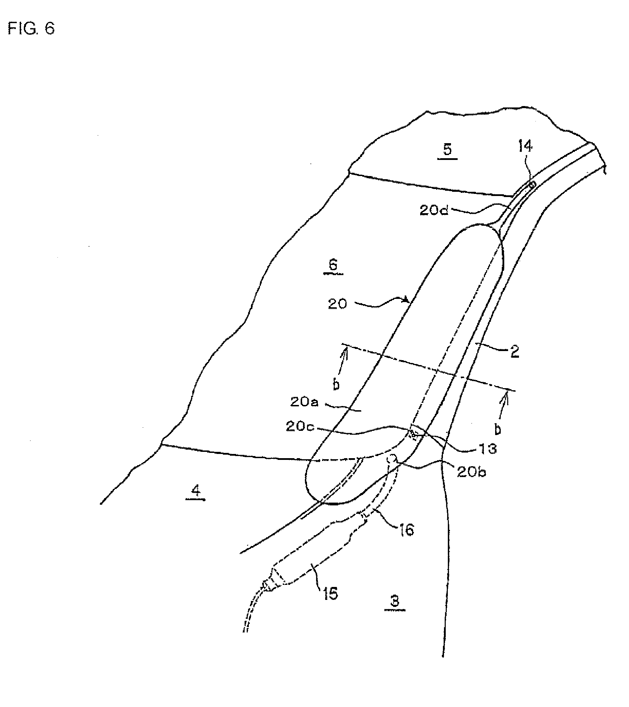

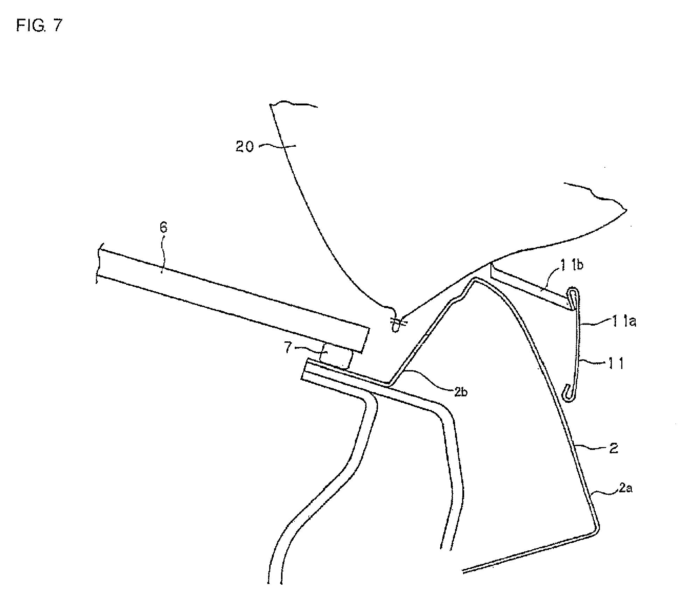

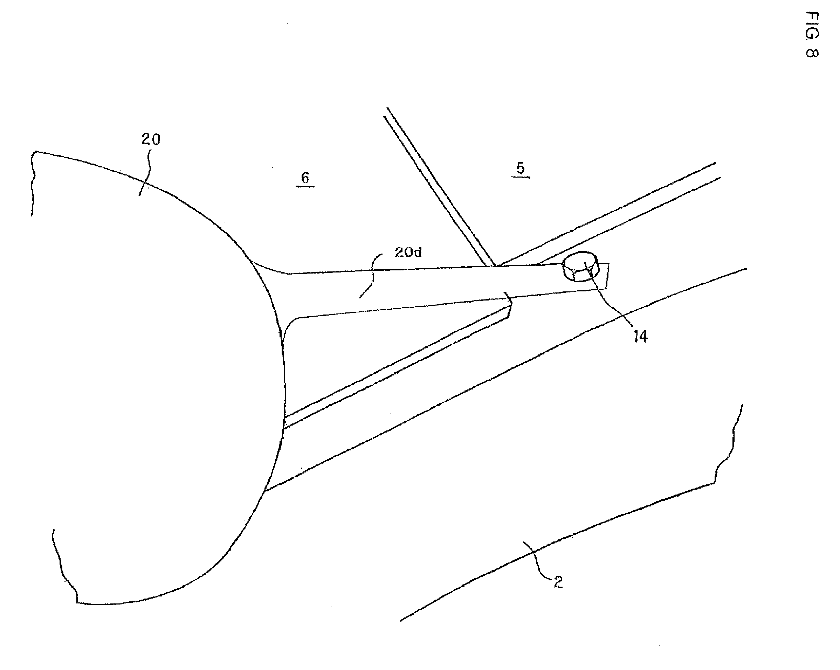

FIG. 6 is a perspective view of the front pillar 2 and its vicinity in the completion stage of inflation. FIG. 7 is a sectional view taken along line b-b of FIG. 6. FIG. 8 is an enlarged view of the anchor 14 and its vicinity.

In the completion stage of inflation, the airbag 20 develops above parts of the fender 3 and the hood 4 and in front of the front pillar 2, in the direction along the front pillar 2.

At this time, the first engaging portion 20c of the airbag 20 is pressed against the vehicle body by the anchor 13 against the inflation of the airbag, and the second engaging portion 20d of the airbag 20 is pressed against the roof 5 by the anchor 14 against the inflation of the airbag. Therefore, the airbag 20 is pressed against the windshield 6 and the front pillar 2.

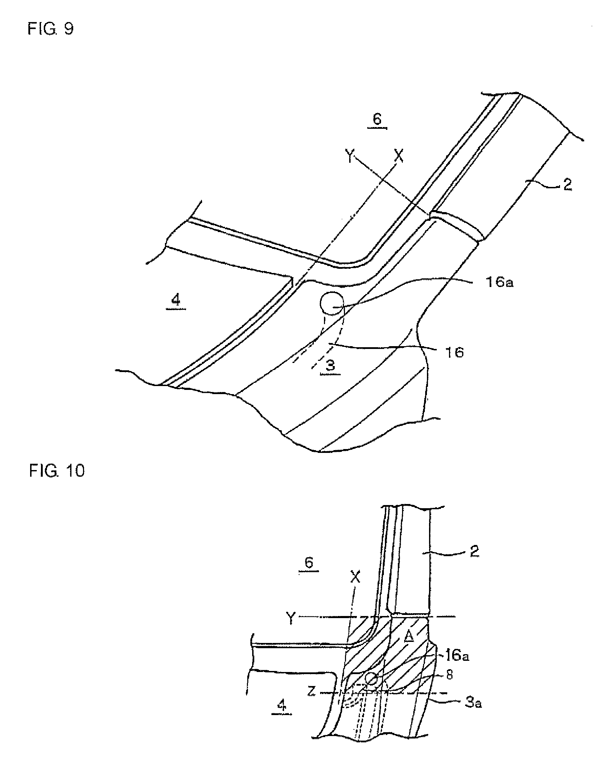

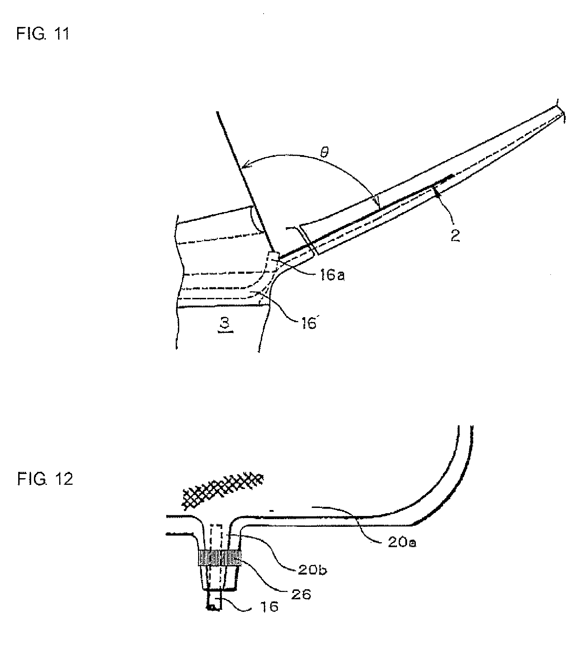

Next, the location of the pipe 16 will be described. FIG. 9 is an enlarged view of the pipe outlet 16a and its vicinity. FIG. 10 is a plan view of FIG. 9. FIG. 11 is a side view of FIG. 9. In FIGS. 9 to 11, the cover 11 is omitted.

In this embodiment, as shown in FIGS. 9 and 10, the pipe outlet 16a provided at one end of the pipe 16 is disposed in the pipe outlet locating area A. As viewed from above, the pipe outlet locating area A is an area surrounded by the extension X of the border between the fender 3 and the hood 4 of the vehicle toward the windshield 6, the extension Y of the border between the fender 3 and the front pillar 2 toward the windshield, the front edge Z of a hinge pivot 8, and the outer surface 3a of the fender 3. In this embodiment, the pipe outlet 16a is disposed so as to face a substantially vertical direction.

As shown in FIG. 11, the pipe outlet 16a may be disposed at an angle q from a direction substantially parallel to the front pillar to a direction substantially perpendicular to the front pillar.

Locating the pipe 16 in this way can expand the space just above the pillar where the airbag 20 is housed. In addition, the lower part of the airbag 20 inflates at an early stage and can catch the head of a pedestrian. Moreover, the airbag 20 uniformly inflates and shakes less when inflating.

Next, the relationship between the pipe 16 and the airbag 20 will be described. FIG. 12 shows the pipe connecting portion 20b and its vicinity. In this embodiment, the pipe 16 is inserted into the pipe connecting portion 20b until the pipe outlet 16a is located in the main inflating portion 20a. Locating the pipe 16 in this way can reduce the load on the airbag 20.

The pipe 16 preferably has flexibility because the direction and location of the gas generator 15 can be changed and therefore the design freedom can be increased.

As described above, the airbag apparatus 10 includes the pipe 16 that supplies gas from the inflator to the airbag 20. The pipe outlet 16a is disposed, as viewed from above, in the pipe outlet locating area A surrounded by the extension X of the border between the fender 3 and the hood 4 of the vehicle 1 toward the windshield 6, the extension Y of the border between the fender 3 and the front pillar 2 toward the windshield 6, the front edge of the hinge pivot, and the outer surface of the fender 3. In addition, the caulking portion 26 between the airbag 20 and the pipe 16 is disposed in a depression. Therefore, the space just above the pillar where the airbag is housed can be expanded.

In addition, since the pipe outlet 16a is disposed at an angle from a direction substantially parallel to the front pillar 2 to a direction substantially perpendicular to the front pillar, the airbag 20 uniformly inflates and shakes less when inflating.

According to the present invention, an airbag apparatus includes a pipe that supplies gas from the inflator to the airbag. The pipe outlet of the pipe is disposed in a pipe outlet locating area surrounded by the extension of the border between a fender and a hood of the vehicle toward a windshield, the extension of the border between the fender and the front pillar toward the windshield, the front edge of a hinge pivot, and the outer surface of the fender. Therefore, the airbag can smoothly inflate without being interfered with by the vehicle. In addition, the pipe outlet is disposed at an angle from a direction substantially parallel to the front pillar to a direction substantially perpendicular to the front pillar. Therefore, the space where the airbag is housed can be expanded. Moreover, the airbag uniformly inflates and shakes less when inflating.

## Claims

1. An airbag apparatus comprising:
an airbag;
an inflator that discharges gas into the airbag;
a detecting means that detects a collision; and
a control means that activates the inflator in response to a signal from the detecting means,
wherein the airbag disposed along a front pillar is inflated outside a vehicle,
the airbag apparatus comprises a pipe that supplies gas from the inflator to the airbag, and
the pipe outlet of the pipe is disposed in a pipe outlet locating area surrounded by the extension of the border between a fender and a hood of the vehicle toward a windshield, the extension of the border between the fender and the front pillar toward the windshield, the front edge of a hinge pivot, and the outer surface of the fender.

2. The airbag apparatus according to Claim 1, wherein a caulking portion between the airbag and the pipe is disposed in a depression.

3. The airbag apparatus according to Claim 1 or 2, wherein the pipe outlet is disposed at an angle from a direction substantially parallel to the front pillar to a direction substantially perpendicular to the front pillar.
